# EUROPEAN PATENT APPLICATION

(11) **EP 2 662 247 A1**
(43) Date of publication of application: **13.11.2013**
(21) Application number: 12732197.4
(22) Date of filing: 06.01.2012
(51) Int. Cl.: B60R 21/264

(54) **GAS GENERATOR**

(30) Priority: 07.01.2011 JP 2011001942
(71) Applicant: Nippon Kayaku Kabushiki Kaisha, Tokyo 102-8172 (JP)
(72) Inventor: OHSUGI, Satoshi, Himeji-shi Hyogo 679-2123 (JP); MUKUNOKI, Hirotaka, Himeji-shi Hyogo 679-2123 (JP); TANAKA, Yusuke, Himeji-shi Hyogo 679-2123 (JP); KIM, Jin Han, GimHae-Si, GyeongSangNam-Do (KR)
(74) Representative: TBK
(86) International application number: PCT/JP2012/050177
(87) International publication number: WO 2012/093721

(57) **Abstract**

A gas generator (1A) includes a lower shell (10), an upper shell (20), a holding portion (30), an igniter (40), an enhancer cup (46), and a filter (70). The lower shell (10) is made of a press-formed product formed by press-working one plate-shaped member made of metal, and includes a protruding cylindrical portion (13) and an opening (15) provided in the protruding cylindrical portion (13). The holding portion (13) is made of a resin-molded portion formed by attaching an insulating fluid resin material to a bottom plate portion (11) so as to reach a part of an outer surface from a part of an inner surface of the bottom plate portion (11) of the lower shell (10) through the opening (15) and solidifying the same. The enhancer cup (46) is held by the holding portion (30) as an locking protruding portion (46a) provided in the enhancer cup (46) is locked to a locking recess portion (36a) provided in the holding portion (30).

## Description

### TECHNICAL FIELD

The present invention relates to a gas generator incorporated in a passenger protection apparatus, and more particularly to what is called a disc type gas generator incorporated in an air bag apparatus equipped in a steering wheel or the like of a car.

### BACKGROUND ART

From a point of view of protection of a driver and/or a passenger in a car or the like, an air bag apparatus which is a passenger protection apparatus has conventionally widely been used. The air bag apparatus is equipped for the purpose of protecting a driver and/or a passenger against shock caused at the time of collision of a vehicle or the like, and it receives a body of a driver or a passenger with an air bag serving as a cushion, as the air bag is expanded and developed instantaneously at the time of collision of the vehicle or the like. The gas generator is equipment which is incorporated in this air bag apparatus, an igniter therein being ignited in response to power feed through a control unit at the time of collision of a vehicle or the like to thereby bum a gas generating agent with flame caused by the igniter and instantaneously generate a large amount of gas, and thus expands and develops an air bag. It is noted that the air bag apparatus is equipped, for example, in a steering wheel, an instrument panel, or the like of a car.

Gas generators of various structures are available, and in particular, what is called a disc type gas generator is available as a gas generator suitably made use of for a driver-seat-side air bag apparatus equipped in a steering wheel or the like. In general, the disc type gas generator has a short cylindrical housing of which axial end portions are closed, a gas discharge opening being provided in a circumferential wall of the housing, and the housing accommodating a gas generating agent, an igniter, a filter, and the like.

The housing of the disc type gas generator is generally constituted of combination of a cylindrical metal member with bottom called a lower shell and a cylindrical metal member with bottom called an upper shell. Of these shells, the lower shell forms at least a bottom plate portion of the housing, to which the igniter is assembled and fixed.

A shape of the upper shell has conventionally relatively been simple, and hence it has generally been fabricated by press-working one plate-shaped member made of metal. In contrast, since a shape of a portion of the lower shell to which the igniter is to be assembled has been complicated, that portion (a portion of the lower shell to serve as an igniter fixation portion) has generally been fabricated by cutting a block made of metal. Fabrication of the lower shell through such cutting, however, has put significant pressure on manufacturing cost, and hence improvement thereof has been demanded.

Then, an attempt to simplify a construction of the lower shell, fabricate the lower shell by press-working one plate-shaped member made of metal, and fix an igniter to the lower shell fabricated by press-working by means of a resin-molded portion through insert molding has been made. For example, Japanese Patent Laying-Open No. 4-266548 (PTD 1), Japanese National Patent Publication No. 2005-528276 (PTD 2), Japanese National Patent Publication No. 2007-521181 (PTD 3), Japanese Patent Laying-Open No. 2010-173558 (PTD 4), Japanese Patent Laying-Open No. 2010-173559 (PTD 5), Japanese Patent Laying-Open No. 2010-173560 (PTD 6), and the like are exemplified as documents disclosing such a construction.

In the gas generator disclosed in any of the documents above, such a construction that an igniter is assembled to a lower shell formed by press-working one plate-shaped member made of metal through insert molding with a resin material serving as a source material has been adopted. More specifically, an insulating fluid resin material is poured into a space between the lower shell and the igniter arranged in an opening provided in the lower shell and then solidified, to thereby form a resin-molded portion, and the resin molded portion is secured to a surface of the igniter and a surface of the lower shell, so that the igniter is fixed to the lower shell.

### CITATION LIST

### PATENT DOCUMENT

PTD 1: Japanese Patent Laying-Open No. 4-266548
PTD 2: Japanese National Patent Publication No. 2005-528276
PTD 3: Japanese National Patent Publication No. 2007-521181
PTD 4: Japanese Patent Laying-Open No. 2010-173558
PTD 5: Japanese Patent Laying-Open No. 2010-173559
PTD 6: Japanese Patent Laying-Open No. 2010-173560

### SUMMARY OF INVENTION

### TECHNICAL PROBLEM

In a disc type gas generator, in order to ensure that a gas generating agent is ignited by flame produced by an igniter, an enhancer agent (enhancer) serving as a combustion promoter is generally arranged between a combustion chamber accommodating a gas generating agent and an igniter. Normally, the enhancer agent is accommodated in an enhancer chamber provided in the inside of a cup-shaped member called an enhancer cup, and the enhancer cup is arranged to protrude into the combustion chamber such that this enhancer chamber faces the igniter (see, for example, Japanese Patent Laying-Open No. 2010-173558, Japanese Patent Laying-Open No. 2010-173559, and Japanese Patent Laying-Open No. 2010-173560).

Here, in a conventional gas generator, such a construction that a flange portion is provided around a periphery of an opening end of an enhancer cup and a collar portion for fixing by crimping the flange portion to a lower shell is provided by cutting has been adopted. When the construction of the lower shell is simplified as described above, however, it is difficult to provide a collar portion in the lower shell, and hence how the enhancer cup is to be assembled to the lower shell becomes an issue.

Then, in the gas generator disclosed in Japanese Patent Laying-Open No. 4-266548 above, an igniter constructed to accommodate an enhancer agent in addition to an ignition agent is made use of as the igniter, and the need for assembly per se of the enhancer cup is obviated so that assembly of the enhancer agent to the lower shell with a simplified construction is enabled. On the other hand, in the gas generator disclosed in any of Japanese Patent Laying-Open No. 2010-173558, Japanese Patent Laying-Open No. 2010-173559, and Japanese Patent Laying-Open No. 2010-173560 above, assembly of the enhancer cup to the lower shell with a simplified construction is enabled either by press-fitting the enhancer cup into a resin-molded portion itself or a member made of metal which is arranged to cover the resin-molded portion, or by fixing by crimping the enhancer cup thereto.

In a case where the construction disclosed in Japanese Patent Laying-Open No. 4-266548 above is adopted, however, exposure of the igniter to a high-temperature and high-pressure environment during insert molding gives rise to a problem. Namely, since the igniter is a part in which an ignition agent, an enhancer agent, or the like sensitively reactive to static electricity, flame, or the like is loaded, handling thereof requires great care. Exposure of the igniter to the high-temperature and high-pressure environment as above, however, involves considerable difficulty in ensuring safety in assembly operations. Then, the assembly operations are significantly restricted, which has resulted in impediment to easy manufacturing of a gas generator.

In addition, in the case where a structure for assembly of the enhancer cup by press-fitting among the constructions disclosed in Japanese Patent Laying-Open No. 2010-173558, Japanese Patent Laying-Open No. 2010-173559, and Japanese Patent Laying-Open No. 2010-173560 above is adopted, high dimension accuracy is required of the enhancer cup, the resin-molded portion, and the like, which gives rise to a problem of poor yield and a problem of pressure to manufacturing cost and impedes easy and inexpensive manufacturing of a gas generator.

Moreover, in the case where a structure for assembly of the enhancer cup by fixing by crimping among the constructions disclosed in Japanese Patent Laying-Open No. 2010-173558, Japanese Patent Laying-Open No. 2010-173559, and Japanese Patent Laying-Open No. 2010-173560 above is adopted, a problem of complicated assembly operations or a problem of disadvantages in terms of lighter weight and lower cost because of the fact that the enhancer cup is inevitably made of metal for fixing by crimping is caused, which again impedes easy and inexpensive manufacturing of a gas generator.

Therefore, the present invention was made to solve the problems described above, and an object thereof is to provide a gas generator which has less restriction on assembly operations and can readily and inexpensively be manufactured.

### SOLUTION TO PROBLEM

A gas generator based on the present invention includes a housing, an igniter, a cup-shaped member, and a holding portion. The housing is made of a short cylindrical member which is constituted of a top plate portion and a bottom plate portion closing axial end portions and a circumferential wall portion provided with a gas discharge opening and includes therein a combustion chamber accommodating a gas generating agent. The igniter serves for burning the gas generating agent and is assembled to the bottom plate portion. The cup-shaped member is formed from a member containing an enhancer chamber accommodating an enhancer agent and arranged to protrude into the combustion chamber so as to face the igniter. The holding portion is provided on the bottom plate portion and holds the igniter. The housing at least has a lower shell including the bottom plate portion and an upper shell including the top plate portion. The lower shell includes a protruding cylindrical portion provided to protrude toward the top plate portion and an opening provided at an axial end portion of the protruding cylindrical portion, which is located on a side of the top plate portion. The holding portion is formed from a resin-molded portion which is formed by attaching a fluid resin material to the bottom plate portion so as to reach a part of an outer surface of the bottom plate portion from a part of an inner surface of the bottom plate portion through the opening and solidifying the fluid resin material so that at least a part of the resin-molded portion is secured to the bottom plate portion. One of the cup-shaped member and the holding portion is provided with a first locking portion and the other of the cup-shaped member and the holding portion is provided with a first locked portion. The cup-shaped member is held by the holding portion by locking of the first locking portion to the first locked portion.

In the gas generator based on the present invention above, preferably, the cup-shaped member is made of a resin.

In the gas generator based on the present invention above, preferably, the holding portion includes a holding wall portion having an annular shape in a portion opposed to the top plate portion, and in that case, preferably, a construction is such that the cup-shaped member is externally inserted in the holding wall portion so that an outer circumferential surface of the holding wall portion is in intimate contact with an inner circumferential surface of the cup-shaped member and a construction is such that the first locking portion is locked to the first locked portion.

In the gas generator based on the present invention above, preferably, the holding portion includes a fitting projection portion having an annular shape in a portion opposed to the top plate portion and the cup-shaped member includes a fitting recess portion having an annular shape in a portion opposed to a side of the bottom plate portion, and in that case, preferably, a construction is such that the fitting projection portion is inserted in the fitting recess portion so that an outer circumferential surface and an inner circumferential surface of the fitting projection portion are in intimate contact with a surface of the fitting recess portion and a construction is such that the first locking portion is locked to the first locked portion.

In the gas generator based on the present invention above, preferably, the first locking portion has a groove portion extending along a circumferential direction, in a portion on a main surface on a side locked to the first locked portion, which corresponds to a root of the first locking portion.

In the gas generator based on the present invention above, preferably, the holding portion includes an accommodation recess portion for accommodating the igniter in a portion opposed to the top plate portion, and in that case, preferably, the igniter is held by the holding portion while it is inserted in the accommodation recess portion from a side of the top plate portion and fitted therein.

In the gas generator based on the present invention above, preferably, one of the igniter and the holding portion is provided with a second locking portion and the other of the igniter and the holding portion is provided with a second locked portion, and in that case, preferably, the igniter is held by the holding portion by locking of the second locking portion to the second locked portion.

In the gas generator based on the present invention above, preferably, the second locking portion has a groove portion extending along a circumferential direction, in a portion on a main surface on a side locked to the second locked portion, which corresponds to a root of the second locking portion.

In the gas generator based on the present invention above, preferably, a through hole provided in the holding portion commonly serves as the first locked portion and the second locked portion.

In the gas generator based on the present invention above, preferably, the lower shell is made of a press-formed product formed by press-working one plate-shaped member made of metal.

### ADVANTAGEOUS EFFECTS OF INVENTION

According to the present invention, a gas generator which has less restriction on assembly operations and can readily and inexpensively be manufactured can be obtained.

### BRIEF DESCRIPTION OF DRAWINGS

Fig. 1 is a schematic diagram of a gas generator in Embodiment 1 of the present invention.
Fig. 2 is an enlarged view of a main portion of the gas generator in Embodiment 1 of the present invention.
Fig. 3 is a schematic diagram for illustrating a structure for assembly and a procedure for assembly of an enhancer cup of the gas generator in Embodiment 1 of the present invention.
Fig. 4 is a schematic diagram of a gas generator in Embodiment 2 of the present invention.
Fig. 5 is an enlarged view of a main portion of the gas generator in Embodiment 2 of the present invention.
Fig. 6 is a schematic diagram of a gas generator in Embodiment 3 of the present invention.
Fig. 7 is an enlarged view of a main portion of the gas generator in Embodiment 3 of the present invention.
Fig. 8 is a schematic diagram of a gas generator in Embodiment 4 of the present invention.
Fig. 9 is an enlarged view of a main portion of the gas generator in Embodiment 4 of the present invention.
Fig. 10 is a schematic diagram of a gas generator in Embodiment 5 of the present invention.
Fig. 11 is an enlarged view of a main portion of the gas generator in Embodiment 5 of the present invention.
Fig. 12 is a schematic diagram of a gas generator in Embodiment 6 of the present invention.
Fig. 13 is an enlarged view of a main portion of the gas generator in Embodiment 6 of the present invention.
Fig. 14 is an enlarged view of a main portion of a gas generator in Embodiment 7 of the present invention.
Fig. 15 is a schematic diagram of a gas generator in Embodiment 8 of the present invention.
Fig. 16 is an enlarged view of a main portion of the gas generator in Embodiment 8 of the present invention.

### DESCRIPTION OF EMBODIMENTS

An embodiment of the present invention will be described hereinafter in detail with reference to the drawings. An embodiment and a variation thereof shown below represent application of the present invention to a disc type gas generator incorporated in an air bag apparatus equipped in a steering wheel or the like of a car. It is noted that the same or common elements in the embodiment and the variation thereof shown below have the same reference characters allotted in the drawings and description thereof will not be repeated.

### (Embodiment 1)

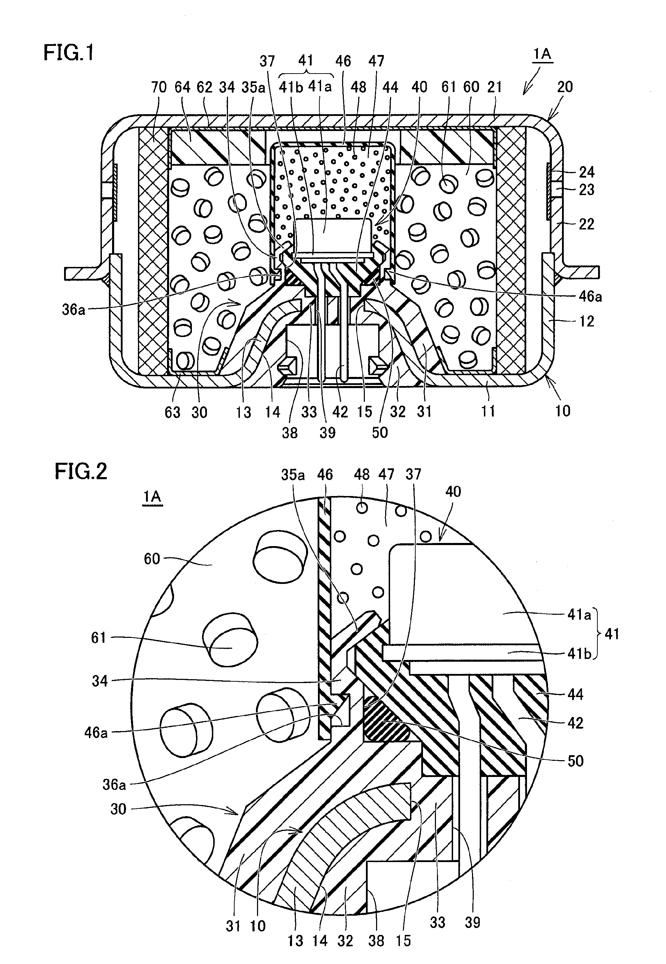

Fig. 1 is a schematic diagram of a gas generator in Embodiment 1 of the present invention. An overall structure of a gas generator 1A in the present embodiment will initially be described with reference to this Fig. 1.

As shown in Fig. 1, gas generator 1A in the present embodiment has a short cylindrical housing having opposing axial ends closed, and is constructed to accommodate as components in this housing, a holding portion 30, an igniter 40, a gas generating agent 61, a filter 70, and the like. The short cylindrical housing includes a lower shell 10 and an upper shell 20. Each of lower shell 10 and upper shell 20 is made of a press-formed product formed by press-working one plate-shaped member made of metal.

Lower shell 10 and upper shell 20 are each formed in a cylindrical shape with bottom, and an outer shell portion of the housing is formed by combining and joining the shells such that open surfaces thereof face each other. Lower shell 10 has a bottom plate portion 11 and a circumferential wall portion 12 and upper shell 20 has a top plate portion 21 and a circumferential wall portion 22. It is noted that electron-beam welding, laser welding, friction welding, or the like is suitably made use of for joining lower shell 10 and upper shell 20 to each other.

A protruding cylindrical portion 13 protruding toward top plate portion 21 is provided in a substantially central portion of bottom plate portion 11 of lower shell 10, so that a depression portion 14 is formed in the substantially central portion of bottom plate portion 11 of lower shell 10. Protruding cylindrical portion 13 is a site to which igniter 40 is fixed with holding portion 30 being interposed, and depression portion 14 is a site serving as a space for providing a female connector portion 38 in holding portion 30. Here, protruding cylindrical portion 13 is formed to be in a cylindrical shape with bottom, and tapered such that an outer diameter thereof decreases toward top plate portion 21. In addition, an opening 15 in a circular shape when viewed two-dimensionally is provided at an axial end portion of protruding cylindrical portion 13, which is located on a side of top plate portion 21. Opening 15 is a site through which a pair of terminal pins 42 of igniter 40 is inserted.

As described above, lower shell 10 is fabricated by press-working one plate-shaped member made of metal. Specifically, lower shell 10 is fabricated by using a pair of molds consisting of an upper mold and a lower mold to press one plate-shaped member made of metal in a vertical direction to thereby form the plate-shaped member in a shape as illustrated.

Here, for example, a metal plate composed of stainless steel, iron steel, an aluminum alloy, a stainless alloy, or the like and having a thickness before pressing approximately not smaller than 1.5 mm and not greater than 3.0 mm is made use of as the plate-shaped member made of metal, and suitably, what is called a high tensile steel plate which is free from such breakage as fracture even at the time of application of tensile stress not lower than 440 MPa and not higher than 780 MPa is suitably made use of. It is noted that, regarding a thickness after pressing, a thickness of a smallest thickness portion is preferably not smaller than approximately 1.0 mm. In addition, press-working may be carried out through hot forging or cold forging, and from a point of view of improvement in dimension accuracy, it is more suitably carried out through cold forging.

As described above, upper shell 20 is fabricated by press-working one plate-shaped member made of metal. Specifically, upper shell 20 is fabricated by using a pair of molds consisting of an upper mold and a lower mold to press one plate-shaped member made of metal in a vertical direction to thereby form the plate-shaped member in a shape as illustrated. Here, a metal plate composed of stainless steel, iron steel, an aluminum alloy, a stainless alloy, or the like can be made use of as the plate-shaped member made of metal.

Holding portion 30 is provided around protruding cylindrical portion 13 provided in the substantially central portion of bottom plate portion 11 of lower shell 10. Holding portion 30 has an inner coating portion 31 covering a part of an inner surface of bottom plate portion 11 of lower shell 10, an outer coating portion 32 covering a part of an outer surface of bottom plate portion 11 of lower shell 10, and a coupling portion 33 located within opening 15 provided in bottom plate portion 11 of lower shell 10 and continuing to each of inner coating portion 31 and outer coating portion 32.

This holding portion 30 is formed from a resin-molded portion formed by attaching an insulating fluid resin material to bottom plate portion 11 so as to reach a part of the outer surface of bottom plate portion 11 from a part of the inner surface thereof through opening 15 provided in bottom plate portion 11 of lower shell 10 and solidifying the fluid resin material. Namely, holding portion 30 is formed by injection molding with the use of a mold (more particularly, outsert molding).

For a source material for holding portion 30 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of. In a case where these thermoplastic resins are selected as a source material, in order to ensure mechanical strength of holding portion 30 after molding, glass fibers or the like are preferably contained as fillers in these resin materials. In a case where sufficient mechanical strength can be ensured only by a thermoplastic resin, however, a filler as described above does not have to be added.

Holding portion 30 is secured to bottom plate portion 11 at a surface on a side of bottom plate portion 11, of each of inner coating portion 31, outer coating portion 32, and coupling portion 33 described above. Here, holding portion 30 is provided to entirely cover protruding cylindrical portion 13 provided in bottom plate portion 11 of lower shell 10, so that protruding cylindrical portion 13 is completely buried in holding portion 30.

In a portion of inner coating portion 31 of holding portion 30, which is opposed to top plate portion 21, a holding wall portion 34 having an annular shape is erected toward top plate portion 21, so that an accommodation recess portion 37 is provided in holding portion 30. Accommodation recess portion 37 is a site for receiving and accommodating a part of igniter 40.

In a portion of outer coating portion 32 of holding portion 30, which faces the outside, female connector portion 38 is formed. This female connector portion 38 is a site for receiving a male connector (not shown) of a harness for connecting igniter 40 and a control unit (not shown) to each other, and it is located in depression portion 14 provided in bottom plate portion 11 of lower shell 10. In this female connector portion 38, a portion of terminal pin 42 of igniter 40 closer to a lower end is arranged as being exposed. The male connector is inserted in female connector portion 38, so that electrical conduction between a core wire of the harness and terminal pin 42 is established.

A pair of insertion holes 39 is provided in coupling portion 33 of holding portion 30. This pair of insertion holes 39 is a site through which a pair of terminal pins 42 of igniter 40 is inserted, and opposing ends thereof reach accommodation recess portion 37 and female connector portion 38 described above, respectively.

Igniter 40 is an ignition device for producing flame and includes an agent loaded portion 41 in which an ignition agent is loaded, a pair of terminal pins 42 described above, and a cover portion 44 provided to cover a part of terminal pin 42. Agent loaded portion 41 contains an ignition agent generating flame as it is ignited and bums at the time of actuation and a resistor for igniting this ignition agent. The pair of terminal pins 42 is connected to agent loaded portion 41 for igniting the ignition agent. It is noted that details of a structure for assembly of igniter 40 to holding portion 30 will be described later.

More specifically, agent loaded portion 41 includes a squib cup 41a made of a cup-shaped member and a base portion 41 b which closes an opening end of squib cup 4 1 a and holds the pair of terminal pins 42 as the pins are inserted therethrough, and has such a construction that the resistor (bridge wire) is attached to couple tip ends of the pair of terminal pins 42 inserted in squib cup 4 1 a to each other and the ignition agent is loaded into squib cup 41a so as to surround or be proximate to this resistor. It is noted that cover portion 44 covers not only a part of terminal pin 42 described above but also base portion 41b.

Here, a Nichrome wire or the like is generally made use of as a resistor, and ZPP (zirconium potassium perchlorate), ZWPP (zirconium tungsten potassium perchlorate), lead tricinate, or the like is generally made use of as the ignition agent. It is noted that squib cup 41a and base portion 41b are generally made of metal or plastic and cover portion 44 is generally made of plastic.

Upon sensing collision, a prescribed amount of current flows in a resistor through terminal pin 42. As the prescribed amount of current flows in the resistor, Joule heat is generated in the resistor and the ignition agent starts burning. Flame at a high temperature caused by burning causes squib cup 41a storing the ignition agent to burst. A time period from flow of a current in the resistor until actuation of igniter 40 is generally not longer than 2 milliseconds in the case where a Nichrome wire is made use of for the resistor.

A sealing member 50 is interposed between igniter 40 and holding portion 30. More specifically, sealing member 50 is arranged between a bottom surface and an inner circumferential surface of accommodation recess portion 37 of holding portion 30 and an outer circumferential surface of cover portion 44 of igniter 40. Sealing member 50 serves to hermetically seal a combustion chamber 60 which will be described later by air tightly sealing a gap created between igniter 40 and holding portion 30, and it is inserted in the gap during assembly of igniter 40 to holding portion 30.

A sealing member made of a material having sufficient heat resistance and durability is preferably made use of as sealing member 50, and for example, an O ring or the like made of an EPDM resin representing one type of ethylene propylene rubber is suitably made use of. It is noted that hermeticity of combustion chamber 60 can further be enhanced by separately applying a liquid sealing agent to a portion where sealing member 50 is to be interposed. Here, a liquid sealing agent containing a resin material excellent in heat resistance, durability, corrosion resistance, and the like after curing is suitably selected and made use of as the liquid sealing agent, and for example, a cyanoacrylate-based resin or a silicone-based resin is particularly suitably made use of as the resin material. In addition, for the resin material, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acryl-based resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, and the like can be made use of.

Enhancer cup 46 as the cup-shaped member is fixed to holding portion 30 so as to cover igniter 40. Enhancer cup 46 has a cylindrical shape with bottom, including a top wall portion and a sidewall portion, and contains an enhancer chamber 47 accommodating an enhancer agent 48. Enhancer cup 46 is fixed to holding portion 30 such that enhancer chamber 47 provided therein faces agent loaded portion 41. It is noted that details for a structure for assembly of enhancer cup 46 to holding portion 30 will be described later.

Enhancer cup 46 completely hermetically seals enhancer chamber 47 provided therein while it is fixed to holding portion 30. This enhancer cup 46 bursts or melts with increase in pressure or with transfer of generated heat within enhancer chamber 47 when igniter 40 is actuated and enhancer agent 48 is ignited. It is noted that an enhancer cup made of a member made of such a metal as aluminum and an aluminum alloy or a member made of such a resin as a thermosetting resin represented by an epoxy resin and the like and a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can suitably be made use of as enhancer cup 46.

Enhancer agent 48 loaded in enhancer chamber 47 produces thermal particles as it is ignited by the flame caused by actuation of igniter 40 and it bums. Enhancer agent 48 should be able to reliably start burning gas generating agent 61 which will be described later, and generally, a composition or the like composed of metal powders/oxidizing agent represented by B/KNO₃ or the like is employed. For enhancer agent 48, a powdery enhancer agent, an enhancer agent formed in a prescribed shape by a binder, or the like is made use of. A shape of the enhancer agent formed by a binder includes, for example, various shapes such as a granule, a column, a sheet, a sphere, a cylinder with a single hole, a cylinder with multiple holes, a tablet, and the like.

Combustion chamber 60 accommodating gas generating agent 61 is located in a space surrounding a portion where enhancer cup 46 described above is arranged, in the space inside the housing constituted of lower shell 10 and upper shell 20. More specifically, enhancer cup 46 described above is arranged to protrude into combustion chamber 60 formed in the inside of the housing, and a space provided in a portion facing an outer surface of a sidewall portion of this enhancer cup 46 is formed as combustion chamber 60.

In addition, in a space surrounding combustion chamber 60 in a radial direction of the housing, filter 70 is arranged along an inner circumference of the housing. Filter 70 has a hollow cylindrical shape, and a central axis thereof is arranged to substantially match with the axial direction of the housing.

Gas generating agent 61 is an agent which is ignited by thermal particles generated as a result of actuation of igniter 40 and produces a gas as it burns. A non-azide-based gas generating agent is preferably employed as gas generating agent 61, and gas generating agent 61 is formed as a molding generally containing a fuel, an oxidizing agent, and an additive. For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of. In addition, as the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of. Moreover, as the additive, a binder, a slag formation agent, a combustion modifier, or the like is exemplified. As the binder, for example, metal salt of carboxymethyl cellulose, an organic binder such as stearate, or an inorganic binder such as synthetic hydrotalcite and Japanese acid clay can suitably be made use of. As the slag formation agent, silicon nitride, silica, Japanese acid clay, or the like can suitably be made use of. In addition, as the combustion modifier, a metal oxide, ferrosilicon, activated carbon, graphite, or the like can suitably be made use of.

A shape of a molding of gas generating agent 61 includes various shapes such as a particulate shape including a granule, a pellet, and a column, and a disc shape. In addition, among columnar moldings, a molding with holes having holes in the molding (such as a cylindrical shape with a single hole or a cylindrical shape with multiple holes) is also made use of. These shapes are preferably selected as appropriate depending on specifications of an air bag apparatus in which gas generator 1A is incorporated, and for example, a shape optimal for the specifications is preferably selected by selecting a shape allowing change over time of a rate of generation of a gas during burning of gas generating agent 61. Furthermore, in addition to a shape of gas generating agent 61, a size of a molding or an amount thereof for filling is preferably selected as appropriate, in consideration of a linear burning velocity, a pressure exponent, or the like of gas generating agent 61.

For example, a filter obtained by winding and sintering a metal wire rod of stainless steel or iron steel, a filter formed by press-working a mesh material into which metal wire rods are knitted to thereby pack the same, a filter obtained by winding a perforated metal plate, or the like is made use of as filter 70. Here, as the mesh material, specifically, a wire gauze of stocking stitch, a plain-woven wire gauze, an aggregate of crimped metal wire rods, or the like is made use of. In addition, as the perforated metal plate, for example, expanded metal obtained by making staggered cuts in a metal plate and forming holes by widening the cuts to thereby work the metal plate in a mesh, hook metal obtained by perforating a metal plate and collapsing burrs caused around a periphery of the hole for flattening, or the like is made use of. In this case, a size or a shape of a hole to be formed can be changed as appropriate as required, and holes different in size or shape may be included in the same metal plate. It is noted that, for example, a steel plate (mild steel) or a stainless steel plate can suitably be made use of as a metal plate, and a nonferrous metal plate of aluminum, copper, titanium, nickel, or an alloy thereof, or the like can also be made use of.

Filter 70 functions as cooling means for cooling a gas by depriving heat at a high temperature of the gas when the gas produced in combustion chamber 60 passes through this filter 70 and also functions as removal means for removing residues (slag) or the like contained in the gas. Therefore, in order to sufficiently cool the gas and to avoid emission of the residue to the outside, the gas produced in combustion chamber 60 should be caused to reliably pass through filter 70.

A plurality of gas discharge openings 23 are provided in circumferential wall portion 22 of upper shell 20 in a portion facing filter 70. This gas discharge opening 23 serves for guiding a gas which has passed through filter 70 to the outside of the housing. To a main surface of circumferential wall portion 22 of upper shell 20, which is located on a side of filter 70, a sealing member 24 is attached to close gas discharge opening 23. An aluminum foil or the like having an adhesive member applied to its one surface is made use of as this sealing member 24. Thus, hermeticity of combustion chamber 60 is ensured.

In the space inside the housing, an upper-side supporting member 62 for fixing an upper end of filter 70 to the housing is arranged at an end portion of upper shell 20 on the side of top plate portion 21. Upper-side supporting member 62 has a site abutting to top plate portion 21 of upper shell 20 and a site abutting to an inner circumferential surface of an upper end portion of filter 70.

In this upper-side supporting member 62, a cushion material 64 is arranged to be in contact with gas generating agent 61 accommodated in combustion chamber 60. This cushion material 64 is provided for the purpose of preventing gas generating agent 61 made of a molding from being crushed by vibration or the like, and a molding of ceramics fibers or a foamed resin (such as foamed silicone) is suitably made use of.

On the other hand, at an end portion of lower shell 10 on the side of bottom plate portion 11 in the space inside the housing, a lower-side supporting member 63 for fixing a lower end of filter 70 to the housing is arranged. Lower-side supporting member 63 has a site abutting to an inner bottom surface of bottom plate portion 11 of lower shell 10 and a site abutting to an inner circumferential surface of a lower end portion of filter 70.

These upper-side supporting member 62 and lower-side supporting member 63 are formed, for example, by press-working or the like a plate-shaped member made of metal, and a steel plate of common steel, special steel, or the like (such as a cold rolled steel plate or a stainless steel plate) is suitably employed. Since upper-side supporting member 62 and lower-side supporting member 63 are formed by folding a part of the plate-shaped member made of metal as described above, upper-side supporting member 62 and lower-side supporting member 63 each have moderate elasticity. Therefore, upper-side supporting member 62 and lower-side supporting member 63 are in contact with the inner circumferential surface of filter 70, so that filter 70 is held and fixed to the housing. In addition, each of upper-side supporting member 62 and lower-side supporting member 63 also has a function to prevent a gas from flowing out through a gap between the upper end of filter 70 and top plate portion 21 of upper shell 20 and a gap between the lower end of filter 70 and bottom plate portion 11 of lower shell 10.

An operation of gas generator 1A in the present embodiment will now be described with reference to Fig. 1.

When a vehicle on which gas generator 1A in the present embodiment is mounted collides, collision sensing means separately provided in the vehicle senses collision, and based thereon, igniter 40 is actuated in response to power feed through a control unit separately provided in the vehicle. Enhancer agent 48 accommodated in enhancer chamber 47 burns as it is ignited by flame produced as a result of actuation of igniter 40 and produces a large number of thermal particles. As this enhancer agent 48 burns, enhancer cup 46 bursts or melts and thermal particles described above flow into combustion chamber 60.

Thermal particles which have flowed in ignite and bum gas generating agent 61 accommodated in combustion chamber 60 and a large amount of gas is produced. The gas produced in combustion chamber 60 passes through filter 70. At that time, heat is deprived of the gas through filter 70 and the gas is cooled, slag contained in the gas is removed by filter 70, and the gas flows into an outer peripheral portion of the housing.

As an internal pressure in the housing increases, sealing by sealing member 24 which has closed gas discharge opening 23 of upper shell 20 is broken, and the gas is discharged to the outside of the housing through gas discharge opening 23. The discharged gas is introduced in the air bag provided adjacent to gas generator 1A and it expands and develops the air bag.

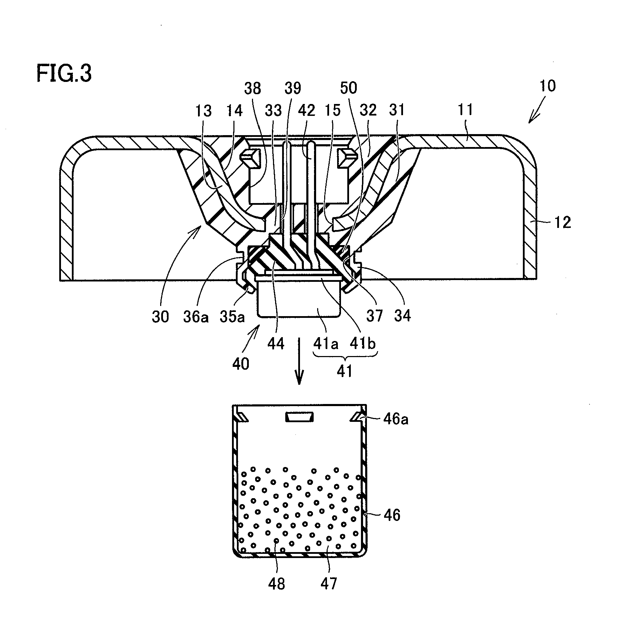

Fig. 2 is an enlarged view of a main portion of the gas generator in the present embodiment. In addition, Fig. 3 is a schematic diagram for illustrating a structure for assembly and a procedure for assembly of the enhancer cup of the gas generator in the present embodiment. A structure for assembly and a procedure for assembly of igniter 40 of gas generator 1A and a structure for assembly, a procedure for assembly, and the like of enhancer cup 46 in the present embodiment will now be described in detail with reference to these Figs. 2 and 3, in addition to Fig. 1 described above.

As shown in Figs. 1 and 2, in gas generator 1A in the present embodiment, cover portion 44 which is a part of igniter 40 is held by holding portion 30 while it is fitted in accommodation recess portion 37 provided in holding portion 30.

Specifically, holding wall portion 34 having an annular shape defining accommodation recess portion 37 of holding portion 30 has a plurality of locking pawl portions 35a provided to align along a circumferential direction at an end portion thereof on the side of top plate portion 21, and locking pawl portions 35a are all formed such that their tip ends face inward. The plurality of locking pawl portions 35a are sites corresponding to a second locking portion for fixing igniter 40 to holding portion 30, which are integrally provided simultaneously with other sites of holding portion 30 at the time of injection molding of holding portion 30. Therefore, the plurality of locking pawl portions 35a are all elastically deformable, and holding wall portion 34 itself is elastically deformable.

On the other hand, cover portion 44 of igniter 40 has a site of which outer shape is formed to be greater than agent loaded portion 41 (that is, a site extending radially outward), and the site corresponds to the second locked portion for fixing igniter 40 to holding portion 30. The site extends annularly along a circumferential direction, and includes inclined upper surface and lower surface and a circumferential surface continuing to these upper surface and lower surface.

In assembly, while holding portion 30 formed from the resin-molded portion is formed in advance through injection molding in bottom plate portion 11 of lower shell 10 and sealing member 50 is accommodated within accommodation recess portion 37 of holding portion 30, igniter 40 is inserted into accommodation recess portion 37 from above (that is, the side of top plate portion 21 after assembly). Here, a pair of terminal pins 42 of igniter 40 is inserted in a pair of insertion holes 39 provided in coupling portion 33 of holding portion 30.

Here, locking pawl portions 35a of holding portion 30 come in contact with the inclined lower surface of cover portion 44 of igniter 40. As described above, however, since locking pawl portions 35a and holding wall portion 34 are elastically deformable, locking pawl portions 35a and holding wall portion 34 retract radially outward, so that cover portion 44 of igniter 40 can be inserted in accommodation recess portion 37.

Then, after igniter 40 is inserted in holding portion 30, locking pawl portions 35a go beyond a side portion of cover portion 44 so that locking pawl portions 35a and holding wall portion 34 return to their original shapes and locking pawl portions 35a are locked to the inclined upper surface of cover portion 44 described above. Thus, igniter 40 is fitted in accommodation recess portion 37 while cover portion 44 thereof is accommodated in accommodation recess portion 37 of holding portion 30, and thus igniter 40 is held by holding portion 30.

In addition, as shown in Figs. 1 and 2, in gas generator 1A in the present embodiment, enhancer cup 46 is held by holding portion 30 while enhancer cup 46 is externally inserted and fitted in holding wall portion 34 provided in holding portion 30.

Specifically, as shown in Figs. 1 to 3, on an inner circumferential surface of the sidewall portion of enhancer cup 46 closer to the opening end, a plurality of locking protruding portions 46a provided to protrude inward are provided. The plurality of locking protruding portions 46a correspond to a first locking portion for fixing enhancer cup 46 to holding portion 30 and are provided to align along the circumferential direction. It is noted that since the sidewall portion of enhancer cup 46 closer to the opening end is formed to be relatively small in thickness, the sidewall portion itself including a portion where the plurality of locking protruding portions 46a are provided is elastically deformable.

On the other hand, on the outer circumferential surface of holding wall portion 34 of holding portion 30 having an annular shape, a plurality of locking recess portions 36a provided to align along the circumferential direction are provided at a position intermediate in a vertical direction. The plurality of locking recess portions 36a are provided to correspond to locking protruding portions 46a provided in enhancer cup 46, and they are sites corresponding to a first locked portion for fixing enhancer cup 46 to holding portion 30. The plurality of locking recess portions 36a are sites integrally provided simultaneously with other sites of holding portion 30 at the time of injection molding of holding portion 30.

During assembly, as shown in Fig. 3, while a prescribed amount of enhancer agent 48 is loaded in advance in enhancer cup 46 and igniter 40 is assembled to holding portion 30 formed from the resin-molded portion, a portion of holding portion 30 provided with holding wall portion 34 is inserted in enhancer cup 46 from the side of the opening end of enhancer cup 46 (that is, the side of bottom plate portion 11 after assembly).

Here, locking protruding portions 46a of enhancer cup 46 come in contact with holding wall portion 34 of holding portion 30. As described above, however, since the sidewall portion of enhancer cup 46 closer to the opening end is elastically deformable, the sidewall portion retracts radially outward and thus holding wall portion 34 can be inserted in enhancer cup 46.

Then, after holding wall portion 34 is inserted in enhancer cup 46, locking protruding portions 46a are fitted in locking recess portions 36a, so that the sidewall portion of enhancer cup 46 closer to the opening end returns to the original shape and locking protruding portions 46a are locked to locking recess portions 36a. Thus, enhancer cup 46 is externally inserted and fitted in holding wall portion 34 while agent loaded portion 41 of igniter 40 faces the inside thereof, and thus enhancer cup 46 is held by holding portion 30.

As described above, since gas generator 1A in the present embodiment is constructed such that igniter 40 and enhancer cup 46 are assembled, separately by fitting, to holding portion 30 which is the resin-molded portion formed in advance through injection molding, igniter 40 and enhancer cup 46 are not insert-molded at the time of injection molding of holding portion 30. Therefore, igniter 40 and enhancer cup 46 which are parts in which an ignition agent and an enhancer agent sensitively reactive to static electricity, flame, or the like are loaded respectively are not exposed to a high-temperature and high-pressure environment during assembly and safety during the assembly operations can be ensured. Therefore, restrictions imposed during the assembly operations are significantly lessened; for example, a place where an operation for injection molding is to be performed is not restricted.

On the other hand, since assembly of igniter 40 and enhancer cup 46 to holding portion 30 can be realized through an operation only for inserting igniter 40 and enhancer cup 46 in holding portion 30, assembly can very readily be achieved. In addition, since holding portion 30 holding igniter 40 and enhancer cup 46 is formed through injection molding, a specific shape thereof can variously be changed by changing a shape of a mold and a structure for locking igniter 40 and enhancer cup 46 can readily be changed to a structure suited to a shape of igniter 40 and enhancer cup 46. Therefore, depending on a shape of igniter 40 and enhancer cup 46 to be used, any shape of holding portion 30 allowing easier assembly can be selected and thus a degree of freedom in design can highly be ensured.

In addition, as compared with a case where enhancer cup 46 is constructed to be press-fitted into holding portion 30 or the like formed from the resin-molded portion, control of dimension accuracy under gentler conditions is enabled and improvement in yield or reduction in manufacturing cost can be expected. Moreover, as compared with a case where enhancer cup 46 is constructed to be fixed by crimping to holding portion 30 or the like formed from the resin-molded portion, enhancer cup 46 can be constructed with a member made of a resin. Therefore, a degree of freedom in design also of the shape itself of enhancer cup 46 is improved and lighter weight and cost reduction of the gas generator as a whole are achieved. Additionally, in the case where enhancer cup 46 is constructed with a member made of a resin, by variously changing a shape, a thickness, a size, a material, and the like thereof, burst or melt of enhancer cup 46 at the time of actuation can be controlled with good controllability and ignition performance or combustion characteristics of gas generating agent 61 can readily be adjusted as desired. Furthermore, as the shape of enhancer cup 46 can variously be changed, an amount of enhancer agent 48 loaded in enhancer cup 46 can freely be changed (for example, increased or the like) and performance of the gas generator can also be improved.

In addition, since holding portion 30 for fixing igniter 40 and enhancer cup 46 to lower shell 10 is formed by injection molding, holding portion 30 is in a state secured to lower shell 10 and sealability at that portion can sufficiently be ensured. Namely, as described above, as inner coating portion 31, outer coating portion 32, and coupling portion 33 constitute holding portion 30, a moderately long margin for securing between lower shell 10 and holding portion 30 can be ensured. Therefore, occurrence of peel-off at an interface portion between lower shell 10 and holding portion 30 can be prevented and sealability can reliably be maintained for a long period of time.

Furthermore, since holding portion 30 for fixing igniter 40 and enhancer cup 46 to lower shell 10 is formed by injection molding, an effect of significantly lighter weight of the holding portion and an effect of being free from burr caused in the case of cutting, ensured reproducibility of a shape of the holding portion, and less likeliness of variation in performance can also be obtained, as compared with a case where the holding portion is formed by cutting lower shell 10.

Thus, with gas generator 1A in the present embodiment, a gas generator less in restrictions on assembly operations, which can readily and inexpensively be manufactured, can be obtained.

Though a case where locking protruding portions 46a are provided in enhancer cup 46 and locking recess portions 36a are provided in holding portion 30 in gas generator 1A in the present embodiment described above has been exemplified, a construction may be such that a locking hole portion passing through holding wall portion 34 is provided in holding portion 30 instead of locking recess portion 36a, or a locking recess portion or a locking hole portion is provided in enhancer cup 46 and a locking protruding portion is provided in holding portion 30.

It is noted that gas generator 1A in the present embodiment described above is constructed such that a size of opening 15 provided in protruding cylindrical portion 13 of lower shell 10 is made smaller than a size of base portion 41b corresponding to a size of igniter 40 at a portion largest in outer shape of agent loaded portion 41. With the construction as such, if unexpected breakage should occur in holding portion 30, igniter 40 could be prevented from passing through opening 15 and jumping out of the housing due to increase in internal pressure in combustion chamber 60, and a safe operation of gas generator 1A would be ensured.

### (Embodiment 2)

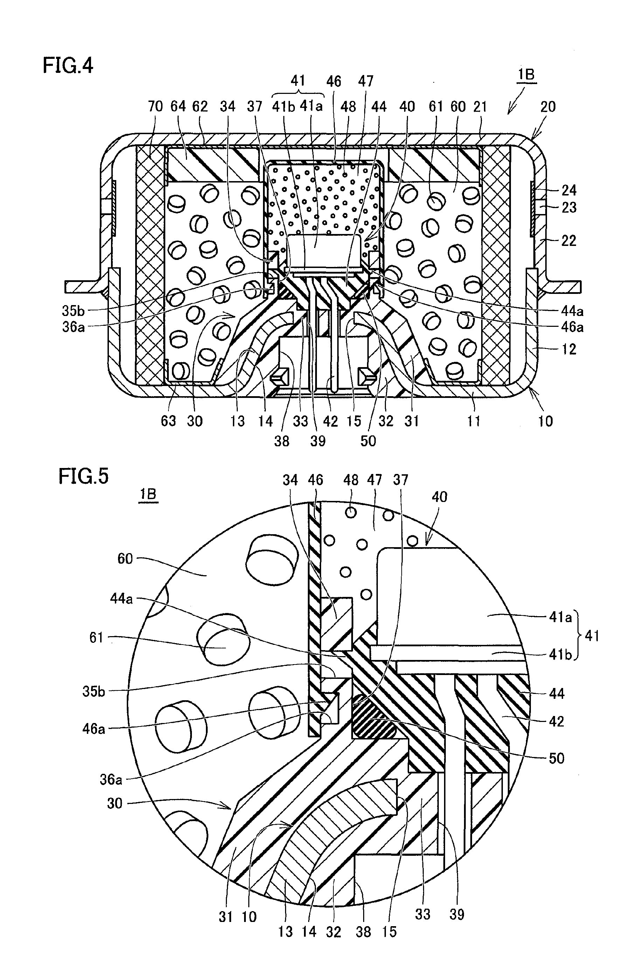

Fig. 4 is a schematic diagram of a gas generator in Embodiment 2 of the present invention, and Fig. 5 is an enlarged view of a main portion. A gas generator 1B in the present embodiment will be described below with reference to these Figs. 4 and 5.

As shown in Figs. 4 and 5, gas generator 1B in the present embodiment is common to gas generator 1A in Embodiment 1 of the present invention described above in a structure for assembly of enhancer cup 46 to holding portion 30, however, it is different from gas generator 1A in Embodiment 1 of the present invention described above in a structure for assembly of igniter 40 to holding portion 30.

More specifically, as shown in Figs. 4 and 5, holding wall portion 34 having an annular shape defining accommodation recess portion 37 of holding portion 30 has a plurality of locking hole portions 35b provided to align along a circumferential direction at a position intermediate in a vertical direction. The plurality of locking hole portions 35b are sites corresponding to the second locked portion for fixing igniter 40 to holding portion 30, which are integrally provided simultaneously with other sites of holding portion 30 at the time of injection molding of holding portion 30. It is noted that holding wall portion 34 itself is elastically deformable.

On the other hand, cover portion 44 of igniter 40 has a plurality of locking protruding portions 46a provided to protrude outward in a circumferential surface at a site of which outer shape is formed to be greater than agent loaded portion 41 (that is, a site extending radially outward), and the plurality of locking protruding portions 46a correspond to the second locking portion for fixing igniter 40 to holding portion 30. The plurality of locking protruding portions 46a are provided to align along the circumferential direction in correspondence with locking hole portions 35b provided in holding portion 30.

During assembly, while holding portion 30 formed from the resin-molded portion is formed in advance by injection molding in bottom plate portion 11 of lower shell 10 and sealing member 50 is accommodated within accommodation recess portion 37 of holding portion 30, igniter 40 is inserted in accommodation recess portion 37 from above (that is, the side of top plate portion 21 after assembly). Here, a pair of terminal pins 42 of igniter 40 is inserted in a pair of insertion holes 39 provided in coupling portion 33 of holding portion 30.

Here, locking protruding portions 44a of igniter 40 come in contact with holding wall portion 34 of holding portion 30. As described above, however, since holding wall portion 34 is elastically deformable, holding wall portion 34 retracts radially outward, so that cover portion 44 of igniter 40 can be inserted in accommodation recess portion 37.

Then, after igniter 40 is inserted in holding portion 30, locking protruding portions 44a are fitted in locking hole portions 35b so that holding wall portion 34 returns to its original shape and locking protruding portions 44a are locked to locking hole portions 35b. Thus, igniter 40 is fitted in accommodation recess portion 37 while cover portion 44 thereof is accommodated in accommodation recess portion 37 of holding portion 30, and thus igniter 40 is held by holding portion 30.

In the case of gas generator 1B in the present embodiment described above as well, an effect the same as in the case of gas generator 1A in Embodiment 1 of the present invention described above can be obtained. Though a case where locking protruding portions 44a are provided in igniter 40 and locking hole portions 35b are provided in holding portion 30 in gas generator 1B in the present embodiment described above has been exemplified, a construction may be such that a locking recess portion is provided in holding portion 30 instead of locking hole portion 35b, or a locking recess portion or a locking hole portion is provided in igniter 40 and a locking protruding portion is provided in holding portion 30.

### (Embodiment 3)

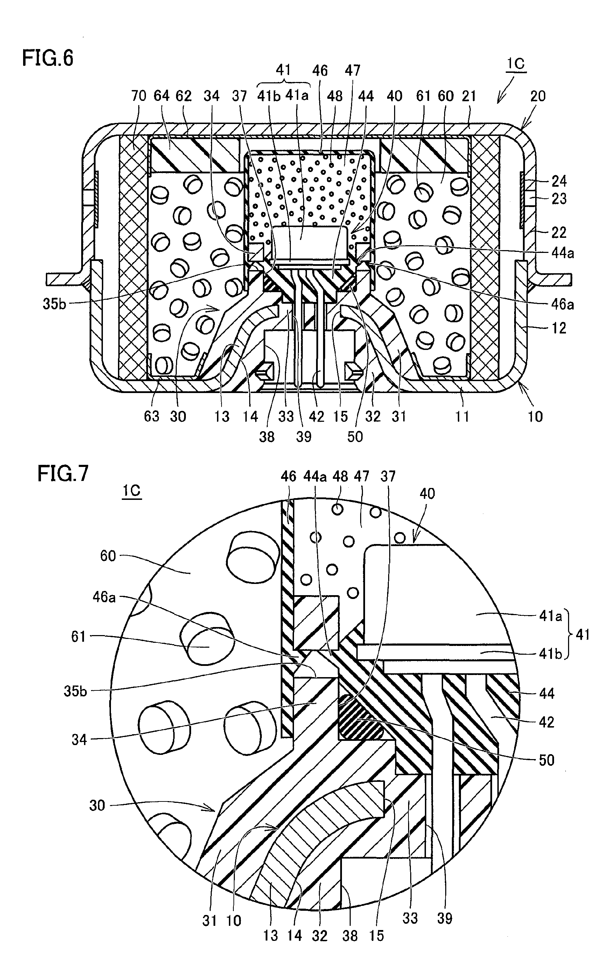

Fig. 6 is a schematic diagram of a gas generator in Embodiment 3 of the present invention, and Fig. 7 is an enlarged view of a main portion. A gas generator 1C in the present embodiment will be described below with reference to these Figs. 6 and 7.

As shown in Figs. 6 and 7, gas generator 1C in the present embodiment is different in a structure of holding wall portion 34 from gas generator 1B in Embodiment 2 of the present invention described above. Namely, in gas generator 1C in the present embodiment, a plurality of locking hole portions 35b formed from through holes are provided in holding wall portion 34 so as to align along a circumferential direction, and no other hole portion, recess portion, or the like is provided. The plurality of locking hole portions 35b are provided in correspondence with locking protruding portions 46a provided in enhancer cup 46 and provided in correspondence with locking protruding portions 44a provided in igniter 40, and they are sites corresponding to the first locked portion for fixing enhancer cup 46 to holding portion 30 and corresponding to the second locked portion for fixing igniter 40 to holding portion 30.

More specifically, as shown in Figs. 6 and 7, locking protruding portions 46a provided in enhancer cup 46 are locked to locking hole portions 35b provided in holding wall portion 34 on a side of the outer circumferential surface of holding wall portion 34 after assembly. In addition, locking protruding portions 44a provided in igniter 40 are locked to locking hole portions 35b provided in holding wall portion 34 on the side of the inner circumferential surface of holding wall portion 34 after assembly. Namely, gas generator 1C in the present embodiment is constructed such that locking hole portion 35b formed from a through hole provided in holding wall portion 34 of holding portion 30 commonly serves as the first locked portion and the second locked portion.

In the case of gas generator 1C in the present embodiment described above as well, an effect the same as in the case of gas generator 1B in Embodiment 2 of the present invention described above can be obtained. In addition, as locking hole portion 35b formed from a through hole commonly serves as the first locked portion and the second locked portion, an effect of simplification of the construction of holding wall portion 34 is also obtained.

### (Embodiment 4)

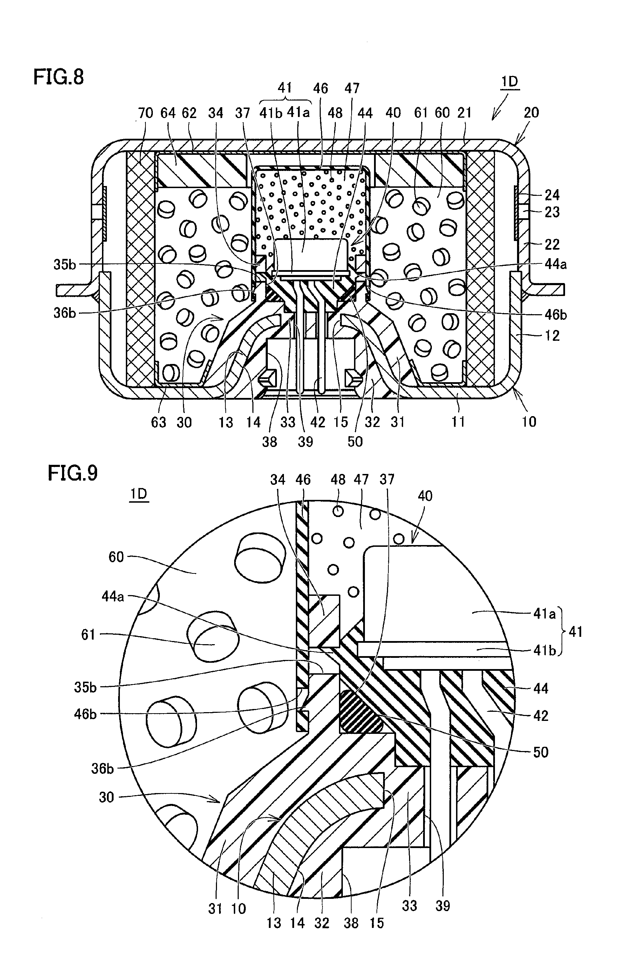

Fig. 8 is a schematic diagram of a gas generator in Embodiment 4 of the present invention, and Fig. 9 is an enlarged view of a main portion. A gas generator 1D in the present embodiment will be described below with reference to these Figs. 8 and 9.

As shown in Figs. 8 and 9, gas generator 1D in the present embodiment is common to gas generator 1 B in Embodiment 2 of the present invention described above in a structure for assembly of igniter 40 to holding portion 30, however, it is different from gas generator 1 B in Embodiment 2 of the present invention described above in a structure for assembly of enhancer cup 46 to holding portion 30.

More specifically, as shown in Figs. 8 and 9, a plurality of locking protruding portions 36b provided to protrude outward are provided on the outer circumferential surface of holding wall portion 34 of holding portion 30 having an annular shape. The plurality of locking protruding portions 36b correspond to the first locking portion for fixing enhancer cup 46 to holding portion 30 and are provided to align along the circumferential direction.

On the other hand, a plurality of locking hole portions 46b formed from through holes are provided in the sidewall portion of enhancer cup 46 closer to the opening end. The plurality of locking hole portions 46b correspond to the first locked portion for fixing enhancer cup 46 to holding portion 30 and are provided to align along the circumferential direction. It is noted that since the sidewall portion of enhancer cup 46 closer to the opening end is formed to be relatively small in thickness, the sidewall portion itself including a portion where the plurality of locking hole portions 46b are provided is elastically deformable.

During assembly, while a prescribed amount of enhancer agent 48 is loaded in advance in enhancer cup 46 and igniter 40 is assembled to holding portion 30 formed from the resin-molded portion, a portion of holding portion 30 provided with holding wall portion 34 is inserted in enhancer cup 46 from the side of the opening end of enhancer cup 46 (that is, the side of bottom plate portion 11 after assembly).

Here, locking protruding portions 36b provided in holding wall portion 34 of holding portion 30 come in contact with the opening end of enhancer cup 46. As described above, however, since the sidewall portion of enhancer cup 46 closer to the opening end is elastically deformable, the sidewall portion retracts radially outward and thus holding wall portion 34 can be inserted in enhancer cup 46.

Then, after holding wall portion 34 is inserted in enhancer cup 46, locking protruding portions 36b are fitted in locking hole portions 46b, so that the sidewall portion of enhancer cup 46 closer to the opening end returns to the original shape and locking protruding portions 36b are locked to locking hole portions 46b. Thus, enhancer cup 46 is externally inserted and fitted in holding wall portion 34 while agent loaded portion 41 of igniter 40 faces the inside thereof, and thus enhancer cup 46 is held by holding portion 30.

In the case of gas generator 1D in the present embodiment described above as well, an effect the same as in the case of gas generator 1B in Embodiment 2 of the present invention described above can be obtained. Though a case where locking protruding portions 44a are provided in igniter 40 and locking hole portions 35b are provided in holding portion 30 in gas generator 1D in the present embodiment described above has been exemplified, a construction may be such that a locking recess portion is provided in holding portion 30 instead of locking hole portion 35b, or a locking recess portion or a locking hole portion is provided in igniter 40 and a locking protruding portion is provided in holding portion 30.

### (Embodiment 5)

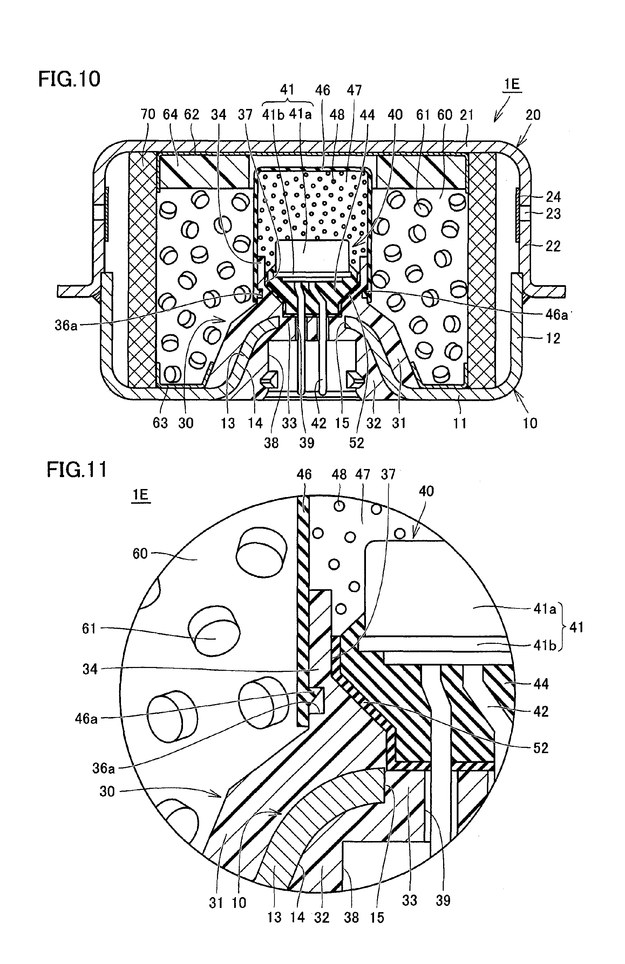

Fig. 10 is a schematic diagram of a gas generator in Embodiment 5 of the present invention, and Fig. 11 is an enlarged view of a main portion. A gas generator 1E in the present embodiment will be described below with reference to these Figs. 10 and 11.

As shown in Figs. 10 and 11, gas generator 1E in the present embodiment is common to gas generator 1A in Embodiment 1 of the present invention described above in a structure for assembly of enhancer cup 46 to holding portion 30, however, it is different from gas generator 1A in Embodiment 1 of the present invention described above in a structure for assembly of igniter 40 to holding portion 30.

More specifically, as shown in Figs. 10 and 11, in gas generator 1E in the present embodiment, a locking mechanism is not provided in holding portion 30 and igniter 40, but instead an adhesive is applied between a surface of accommodation recess portion 37 of holding portion 30 and a surface of cover portion 44 of igniter 40 opposed thereto, so that holding portion 30 holds igniter 40 by means of an adhesive layer 52 formed by curing of the adhesive. Here, if an adhesive poor in hygroscopicity is employed as the adhesive, adhesive layer 52 itself formed as a result of curing of the adhesive functions as a sealing member. Therefore, by filling a gap between cover portion 44 of igniter 40 and accommodation recess portion 37 of holding portion 30 with adhesive layer 52, it is not necessary to interpose a sealing member formed from a separate member such as an O ring, which also contributes to reduction in the number of parts.

For the adhesive above, an adhesive containing a resin material excellent in heat resistance, durability, corrosion resistance, and the like after curing is suitably selected and made use of, and for example, a cyanoacrylate-based resin or a silicone-based resin is particularly suitably made use of as the resin material. In addition, for the resin material, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acryl-based resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, and the like can be made use of.

During assembly, while holding portion 30 formed from the resin-molded portion is formed in advance by injection molding in bottom plate portion 11 of lower shell 10 and an adhesive is applied to the surface of accommodation recess portion 37 of holding portion 30, igniter 40 is inserted in accommodation recess portion 37 from above (that is, the side of top plate portion 21 after assembly). Here, a pair of terminal pins 42 of igniter 40 is inserted in a pair of insertion holes 39 provided in coupling portion 33 of holding portion 30.

Thus, igniter 40 is fitted in accommodation recess portion 37 while cover portion 44 thereof is accommodated in accommodation recess portion 37 of holding portion 30. As the adhesive is cured, holding portion 30 holds igniter 40. It is noted that the adhesive may be applied to cover portion 44 of igniter 40.

In the case of gas generator 1E in the present embodiment described above as well, an effect the same as in the case of gas generator 1A in Embodiment 1 of the present invention described above can be obtained. Though a case where locking protruding portions 46a are provided in enhancer cup 46 and locking recess portions 36a are provided in holding portion 30 in gas generator 1E in the present embodiment described above has been exemplified, a construction may be such that a locking hole portion passing through holding wall portion 34 is provided in holding portion 30 instead of locking recess portion 36a, or a locking recess portion or a locking hole portion is provided in enhancer cup 46 and a locking protruding portion is provided in holding portion 30.

### (Embodiment 6)

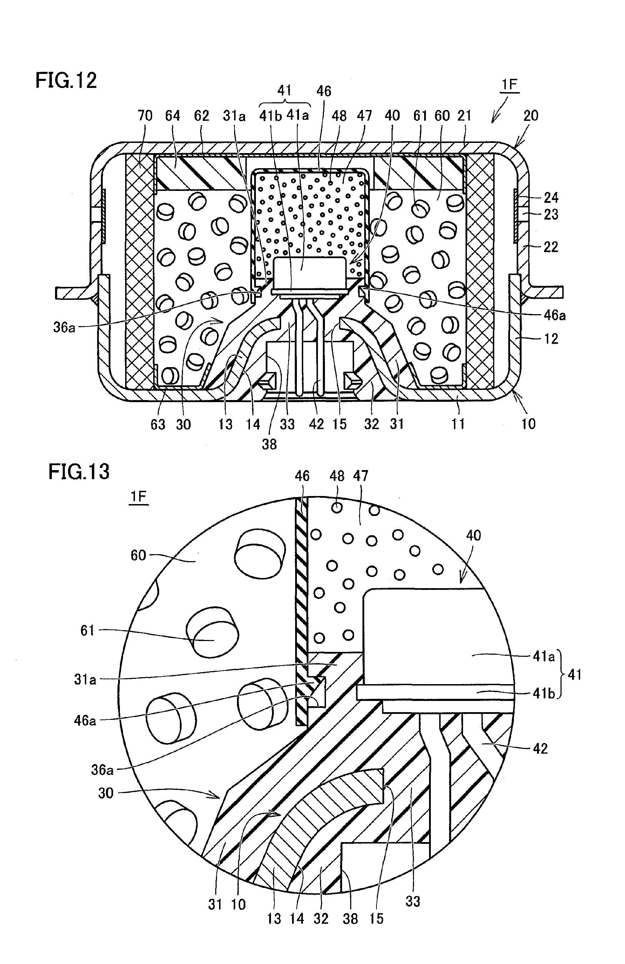

Fig. 12 is a schematic diagram of a gas generator in Embodiment 6 of the present invention, and Fig. 13 is an enlarged view of a main portion. A gas generator 1F in the present embodiment will be described below with reference to these Figs. 12 and 13.

As shown in Figs. 12 and 13, gas generator 1F in the present embodiment is common to gas generator 1 A in Embodiment 1 of the present invention described above in a structure for assembly of enhancer cup 46 to holding portion 30, however, it is different from gas generator 1A in Embodiment 1 of the present invention described above in a structure for assembly of igniter 40 to lower shell 10.

More specifically, as shown in Figs. 12 and 13, in gas generator 1F in the present embodiment, igniter 40 is integrally assembled to holding portion 30 at the time of injection molding of holding portion 30 formed from the resin-molded portion provided in lower shell 10. Namely, in the present embodiment, igniter 40 is assembled to lower shell 10 through insert molding and holding portion 30 is secured to the surface of igniter 40 at a fixation portion 31 a provided in inner coating portion 31.

Therefore, in gas generator 1F in the present embodiment, locking recess portions 36a serving as the first locked portion for fixing enhancer cup 46 to holding portion 30 are provided to align along the circumferential direction of the outer circumferential surface of fixation portion 31 a described above, and locking protruding portions 46a serving as the first locking portion provided in enhancer cup 46 are locked to locking recess portions 36a provided in fixation portion 31a after assembly.

In the case of gas generator 1F in the present embodiment described above as well, an effect the same as in the case of gas generator 1A in Embodiment 1 of the present invention described above can be obtained. Though a case where locking protruding portions 46a are provided in enhancer cup 46 and locking recess portions 36a are provided in holding portion 30 in gas generator 1F in the present embodiment described above has been exemplified, a construction may be such that a locking hole portion passing through fixation portion 31a is provided in holding portion 30 instead of locking recess portion 36a, or a locking recess portion or a locking hole portion is provided in enhancer cup 46 and a locking protruding portion is provided in holding portion 30.

### (Embodiment 7)

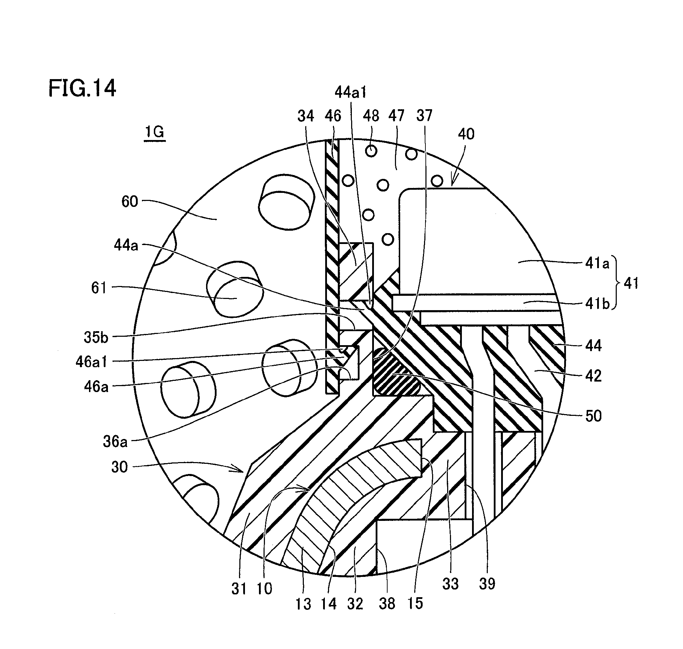

Fig. 14 is an enlarged view of a main portion of a gas generator in Embodiment 7 of the present invention. A gas generator 1 G in the present embodiment will be described below with reference to this Fig. 14.

As shown in Fig. 14, gas generator 1 G in the present embodiment has a structure basically common to that of gas generator 1B in Embodiment 2 of the present invention described above in a structure for assembly of igniter 40 to holding portion 30 and a structure for assembly of enhancer cup 46 to holding portion 30, and a difference resides in a specific shape of locking protruding portion 46a serving as the first locking portion provided in enhancer cup 46 and a specific shape of locking protruding portion 44a serving as the second locking portion provided in igniter 40.

More specifically, each of a plurality of locking protruding portions 46a provided in enhancer cup 46 has a groove portion 46a1 extending in a circumferential direction, in a portion in a main surface on a side to be locked to locking recess portion 36 serving as the first locked portion (that is, the upper surface of locking protruding portion 46a in the figure) in correspondence with a root of locking protruding portion 46a.

Groove portion 46a1 is provided such that locking protruding portion 46a is more readily elastically deformable at the time of contact of locking protruding portion 46a with holding wall portion 34 during assembly, and provided to prevent plastic deformation of locking protruding portion 46a during assembly.

On the other hand, each of a plurality of locking protruding portions 44a provided in igniter 40 has a groove portion 44a1 extending in a circumferential direction, in a portion in a main surface on a side to be locked to locking hole portion 35b serving as the second locked portion (that is, the upper surface of locking protruding portion 44a in the figure) in correspondence with a root of locking protruding portion 44a.

Groove portion 44a1 is provided such that locking protruding portion 44a is more readily elastically deformable at the time of contact of locking protruding portion 44a with holding wall portion 34 during assembly, and provided to prevent plastic deformation of locking protruding portion 44a during assembly.

In the case of gas generator 1 G in the present embodiment described above as well, an effect the same as in the case of gas generator 1B in Embodiment 2 of the present invention described above can be obtained.

In addition, by adopting the construction above, the root portions of locking protruding portion 46a and locking protruding portion 44a are greatly bent at the time of assembly of enhancer cup 46 and igniter 40, so that locking protruding portion 46a and locking protruding portion 44a readily elastically deform and smooth assembly of enhancer cup 46 and igniter 40 to holding portion 30 can be achieved. In addition, concentration of compressive stress at the root portion of locking protruding portion 46a and locking protruding portion 44a and resultant plastic deformation can be prevented, and stable assembly of enhancer cup 46 and igniter 40 to holding portion 30 can be achieved.

Namely, by adopting the construction above, not only assembly operations are facilitated, but also locking protruding portion 46a and locking protruding portion 44a more readily return to their original shapes after assembly. Therefore, variation in accuracy in position of assembly caused by plastic deformation of locking protruding portion 46a and locking protruding portion 44a can be suppressed, and such defective conditions as wobbling of enhancer cup 46 and igniter 40 after assembly or insufficient assembly strength can effectively be prevented.

Though a case where a groove portion is provided in each of locking protruding portion 46a provided in enhancer cup 46 and locking protruding portion 44a provided in igniter 40 in gas generator 1 G in the present embodiment has been exemplified, a groove portion should only be provided as necessary, and in some cases, a groove portion may be provided in only one of them.

### (Embodiment 8)

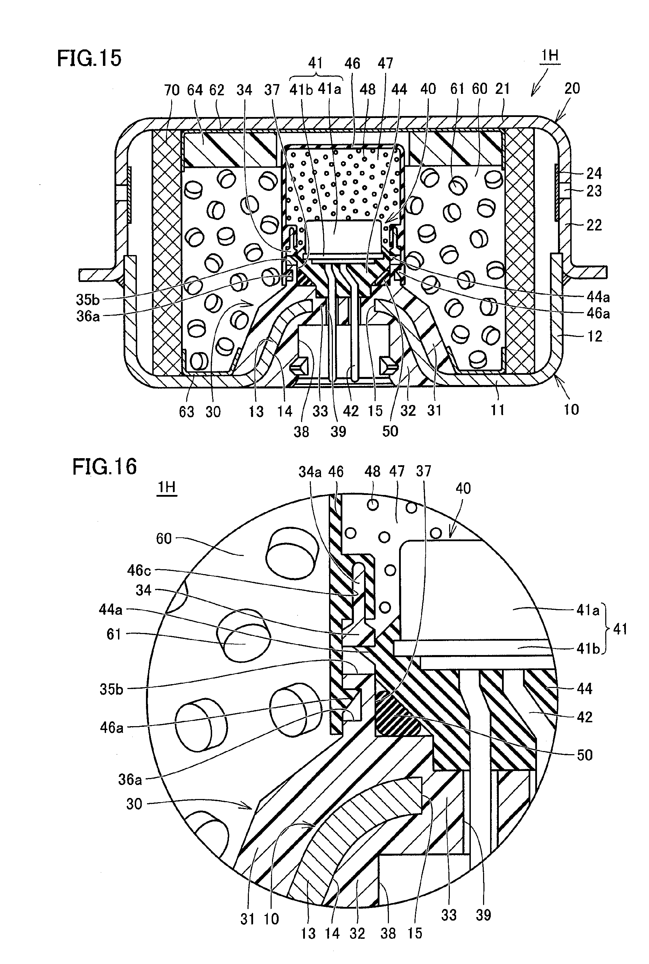

Fig. 15 is a schematic diagram of a gas generator in Embodiment 8 of the present invention, and Fig. 16 is an enlarged view of a main portion. A gas generator 1 H in the present embodiment will be described below with reference to these Figs. 15 and 16.

As shown in Figs. 15 and 16, gas generator 1H in the present embodiment has a structure basically common to that of gas generator 1 B in Embodiment 2 of the present invention described above in a structure for assembly of igniter 40 to holding portion 30 and a structure for assembly of enhancer cup 46 to holding portion 30, and a difference resides in increase in the number of sites where enhancer cup 46 and holding portion 30 are in contact with each other in a state after assembly of enhancer cup 46 to holding portion 30 as compared with gas generator 1B in Embodiment 2 of the present invention described above.

In general, in the event that a fire breaks out in a vehicle or the like equipped with an air bag apparatus incorporating a gas generator, there is a case that the gas generator is externally heated and a temperature in the gas generator is increased approximately up to several hundred degrees. In that case, if a temperature of a gas generating agent or an enhancer agent may reach a spontaneous ignition temperature thereof, an abnormal operation in which the gas generating agent starts burning without actuation of the igniter will be induced.

In the case where the abnormal operation is induced, the gas generator itself is already in a high-temperature state due to external heating and a pressure in the housing increases up to a pressure much higher than a pressure required at the time of actuation of the igniter described above due to combustion of the gas generating agent, which leads to concerns of breakage of the housing. If such breakage occurs in the housing, broken pieces or internal components of the housing will scatter around and a serious problem in terms of safety will arise.

Therefore, normally, the gas generator is constructed such that a spontaneous ignition temperature of an enhancer agent is relatively low, in order for the gas generating agent to start burning as the enhancer agent spontaneously ignites in advance while a temperature is relatively low until a high-temperature state where the above-described problem is caused is reached in the case where the gas generator is externally heated. In this case, the construction should be such that a temperature of the enhancer agent increases earlier as a result of external heating, and to that end, it is important to improve heat transfer through a heat transfer path between the enhancer agent and the housing.

Then, as described above, gas generator 1 H in the present embodiment is constructed such that a fitting projection portion 34a having an annular shape is provided at the tip end of holding wall portion 34 of holding portion 30, which is a portion opposed to top plate portion 21 of upper shell 20, for ensuring a greater area of contact after assembly between holding portion 30 formed from the resin-molded portion integrated with lower shell 10 and enhancer cup 40 and a fitting recess portion 46c having an annular shape is provided in a portion of enhancer cup 40 opposed to bottom plate portion 11 of lower shell 10 and such that fitting projection portion 34a is inserted (press-fitted) in fitting recess portion 46c after assembly.

By constructing as such, an outer circumferential surface and an inner circumferential surface of fitting projection portion 34a are in intimate contact with a surface of fitting recess portion 46c after assembly, and an area of contact between holding portion 30 and enhancer cup 46 increases as compared with the case of gas generator 1 B in Embodiment 2 of the present invention described above, and heat conduction between these members is enhanced. Therefore, in the case where gas generator 1H is externally heated, enhancer agent 48 is heated earlier and breakage of the housing in the abnormal operation described above can be prevented.

Therefore, in the case of gas generator 1 H in the present embodiment described above, not only an effect the same as in the case of gas generator 1B in Embodiment 2 of the present invention described above but also an effect that a gas generator is excellent in terms of safety can be obtained. In addition, by adopting the construction above, fitting projection portion 34a and fitting recess portion 46c are fitted to each other after assembly and hence enhancer cup 46 is more firmly fixed to holding portion 30. Thus, assembly strength is improved and such a defective condition as spill of enhancer agent 48 into combustion chamber 60 can also be prevented.

In Embodiments 1 to 8 of the present invention described above, a case where a lower shell is formed from a press-formed product formed by press-working one plate-shaped member made of metal has been exemplified, however, limitation thereto is not necessarily intended. A lower shell formed by combination of press-working and another type of working (forging, drawing, cutting, or the like) may be employed, or a lower shell formed only by another type of working may be employed.

Moreover, characteristic features of the gas generators according to Embodiments 1 to 8 of the present invention described above can naturally be combined with one another within the scope allowable in light of the gist of the present invention. Furthermore, a specific shape of a protruding cylindrical portion provided in a lower shell described above, a specific shape of a holding portion provided on the lower shell, shapes of an enhancer cup and an igniter fitted in the holding portion, and the like can also naturally be modified as appropriate.

Thus, each embodiment above disclosed herein are illustrative and non-restrictive in every respect. The technical scope of the present invention is delimited by the terms of the claims and is intended to include any modifications within the scope and meaning equivalent to the terms of the claims.

### REFERENCE SIGNS LIST

1A to 1 H gas generator; 10 lower shell; 11 bottom plate portion; 12 circumferential wall portion; 13 protruding cylindrical portion; 14 depression portion; 15 opening; 20 upper shell; 21 top plate portion; 22 circumferential wall portion; 23 gas discharge opening; 24 sealing member; 30 holding portion; 31 inner coating portion; 31a fixation portion; 32 outer coating portion; 33 coupling portion; 34 holding wall portion; 34a fitting projection portion; 35a locking pawl portion; 35b locking hole portion; 36a locking recess portion; 36b locking protruding portion; 37 accommodation recess portion; 38 female connector portion; 39 insertion hole; 40 igniter; 41 agent loaded portion; 41a squib cup; 41b base portion; 42 terminal pin; 44 cover portion; 44a locking protruding portion; 44a1 groove portion; 46 enhancer cup; 46a locking protruding portion; 46a1 groove portion; 46b locking hole portion; 46c fitting recess portion; 47 enhancer chamber; 48 enhancer agent; 50 sealing member; 52 adhesive layer; 60 combustion chamber; 61 gas generating agent; 62 upper-side supporting member; 63 lower-side supporting member; 64 cushion material; and 70 filter.

## Claims

1. A gas generator, comprising:
a short cylindrical housing which is constituted of a top plate portion (21) and a bottom plate portion (11) closing axial end portions and a circumferential wall portion (12, 22) provided with a gas discharge opening (23) and includes therein a combustion chamber (60) accommodating a gas generating agent (61);
an igniter (40) assembled to said bottom plate portion (11), for burning said gas generating agent (61);
a cylindrical cup-shaped member (46) with bottom containing an enhancer chamber (47) accommodating an enhancer agent (48) and arranged to protrude into said combustion chamber (60) so as to face said igniter (40); and
a holding portion (30) provided on said bottom plate portion (11), for holding said igniter (40),
said housing at least having a lower shell (10) including said bottom plate portion (11) and an upper shell (20) including said top plate portion (21),
said lower shell including a protruding cylindrical portion (13) provided to protrude toward said top plate portion (21) and an opening (15) provided at an axial end portion of said protruding cylindrical portion (13), which is located on a side of said top plate portion (21),
said holding portion (30) being formed from a resin-molded portion which is formed by attaching a fluid resin material to said bottom plate portion (11) so as to reach a part of an outer surface of said bottom plate portion (11) from a part of an inner surface of said bottom plate portion (11) through said opening (15) and solidifying the fluid resin material so that at least a part of the resin-molded portion is secured to said bottom plate portion (11),
one of said cup-shaped member (46) and said holding portion (30) being provided with a first locking portion,
the other of said cup-shaped member (46) and said holding portion (30) being provided with a first locked portion, and
said cup-shaped member (46) being held by said holding portion (30) by locking of said first locking portion to said first locked portion.

2. The gas generator according to claim 1, wherein
said cup-shaped member (46) is made of a resin.

3. The gas generator according to claim 1, wherein
said holding portion (30) includes a holding wall portion (34) having an annular shape in a portion opposed to said top plate portion (21), and
said cup-shaped member (46) is externally inserted in said holding wall portion (34) so that an outer circumferential surface of said holding wall portion (34) is in intimate contact with an inner circumferential surface of said cup-shaped member (46) and said first locking portion is locked to said first locked portion.

4. The gas generator according to claim 1, wherein
said holding portion (30) includes a fitting projection portion (34a) having an annular shape in a portion opposed to said top plate portion (21),
said cup-shaped member (46) includes a fitting recess portion (46c) having an annular shape in a portion opposed to a side of said bottom plate portion (11), and
said fitting projection portion (34a) is inserted in said fitting recess portion (46c) so that an outer circumferential surface and an inner circumferential surface of said fitting projection portion (34a) are in intimate contact with a surface of said fitting recess portion (46c) and said first locking portion is locked to said first locked portion.

5. The gas generator according to claim 1, wherein
said first locking portion has a groove portion extending along a circumferential direction, in a portion on a main surface on a side locked to said first locked portion, which corresponds to a root of said first locking portion.

6. The gas generator according to claim 1, wherein
said holding portion (30) includes an accommodation recess portion (37) for accommodating said igniter (40) in a portion opposed to said top plate portion (21), and
said igniter (40) is held by said holding portion (30) while it is inserted in said accommodation recess portion (37) from a side of said top plate portion (21) and fitted therein.

7. The gas generator according to claim 1, wherein
one of said igniter (40) and said holding portion (30) is provided with a second locking portion,
the other of said igniter (40) and said holding portion (30) is provided with a second locked portion, and
said igniter (40) is held by said holding portion (30) by locking of said second locking portion to said second locked portion.

8. The gas generator according to claim 7, wherein
said second locking portion has a groove portion extending along a circumferential direction, in a portion on a main surface on a side locked to said second locked portion, which corresponds to a root of said second locking portion.

9. The gas generator according to claim 7, wherein
a through hole provided in said holding portion (30) commonly serves as said first locked portion and said second locked portion.
